# EUROPEAN PATENT SPECIFICATION

(11) **EP 4 350 644 B1**
(45) Date of publication and mention of the grant of the patent: **02.12.2026**
(21) Application number: 22199831.3
(22) Date of filing: 05.10.2022
(51) Int. Cl.: G06V 20/59, G06V 40/16

(54) **POSE DETECTION OF PERSONS IN A VEHICLE**
HALTUNGSERKENNUNG VON PERSONEN IN EINEM FAHRZEUG
DÉTECTION DE POSE DE PERSONNES DANS UN VÉHICULE

(43) Date of publication of application: 10.04.2024
(73) Proprietor: Aptiv Technologies AG, 8200 Schaffhausen (CH)
(72) Inventor: ZHANG, Xuebing, 42119 Wuppertal (DE); REHFELD, Timo, 51109 Köln (DE)
(74) Representative: Bardehle Pagenberg Partnerschaft mbB Patentanwälte Rechtsanwälte

(56) References cited:
- US-A1- 2022 114 817
- CHENG S Y ET AL: "Human posture estimation using voxel data for "smart" airbag systems: issues and framework", INTELLIGENT VEHICLES SYMPOSIUM, 2004 IEEE PARMA, ITALY JUNE 14-17, 2004, PISCATAWAY, NJ, USA,IEEE, 14 June 2004 (2004-06-14), pages 84 - 89, XP010727447, ISBN: 978-0-7803-8310-4, DOI: 10.1109/IVS.2004.1336360

## Description

### FIELD

The present disclosure generally relates to safety improvements for vehicles and, in particular, to methods and systems of pose detection of a person on a vehicle seat.

### BACKGROUND

Smart vehicles, such as smart cars, smart busses, and the like, significantly improve the safety of passengers. One task in such smart vehicles is seat occupancy detection, which aims at detecting persons, objects, child seats or the like placed on a seat. Other tasks involve control functionalities such as seat belt control, airbag control, air condition control, and so forth.

Early seat occupancy detection systems were built on weight sensors for detecting weights on seats. More recent seat occupancy detection systems alternatively or additionally process images taken by cameras in the vehicle. With the development of 2D object detection, it becomes more and more popular to use object detection for support of seat occupancy detection in a vehicle's cabin. Therefore, those detected objects are assigned to seats. For this purpose, the position of the detected objection in relation to a fixed area, which is assigned to a seat, is considered.

Wrong seat assignments may happen if the object or person is in an unclear position or moves. For instance, imagine one person sitting on the seat behind the driver seat and leaning to the middle seat. In this scenario, the front seat will cover some part of the person. Hence, only the visible part of person may be taken into account and the seat occupancy system may decide to assign the person to the rear middle seat.

Since some safety means have to be controlled differently if a seat is occupied or not, there is a need for reliably detecting a seat occupancy state in the vehicle.

Document *"*Human posture estimation using voxel data for "smart" airbag systems: issues and framework" (S. Y. Cheng and M. M. Trivedi; IEEE Intelligent Vehicles Symposium, 2004, Parma, Italy, 2004, pp. 84-89; doi: 10.1109/IVS.2004.1336360) examines the feasibility of a multi-camera voxel based occupant posture estimation system.

### SUMMARY

The invention is defined by the independent claims. More specifically, a computerized method of pose detection of a person in a vehicle is presented. The method comprises receiving, from an on-board camera, an image of an interior of the vehicle showing a seat of the vehicle occupied by the person, obtaining first characteristics of a first face bounding area and a first body bounding area associated with the occupied seat of the vehicle, determining a second body bounding area and an associated second face bounding area of the person from the image, determining second characteristics of the second face bounding area and the second body bounding area, and determining a pose of the person based on the second characteristics and on the first characteristics.

In embodiments, obtaining the first characteristics comprises retrieving the first face bounding area and the first body bounding area from a first memory based on a facial identification of the person. In some embodiments, obtaining the first characteristics comprises retrieving the first face bounding area and the first body bounding area from a second memory, wherein the first face bounding area and the first body bounding area are determined based on a mean position and/or mean area of face bounding areas and body bounding areas historically captured for persons on the seat. In yet some embodiments, obtaining the first characteristics comprises determining the first face bounding area and the first body bounding area based on a mean position and/or mean area of face bounding areas and body bounding areas captured on a plurality of images of the interior of the vehicle for the person on the seat in a certain initialization period.

In embodiments, the at least one characteristic comprises a position of a face bounding area and a position of a body bounding area. Then, determining the pose of the person comprises calculating a left-right-leaning value of the person based on the position of the first face bounding area and the first body bounding area and the position of the second face bounding area and the second body bounding area and determining that the person is leaning to the right or to the left based on the left-right-leaning value.

In embodiments, the at least one characteristic comprises an area covered by a face bounding area and an area covered by a body bounding area. Then, determining the pose of the person comprises calculating a forward-backward-leaning value of the person based on at least two of the area of the first face bounding area, the area of the first body bounding area, the area of the second face bounding area, and area of the second body bounding area and determining that the person is leaning forward or backward based on the forward-backward-leaning value.

In embodiments, the pose detection for a seat occupancy system is used to control safety functions in the vehicle. In some embodiments, a graphical representation on a display within the vehicle is based on an output of the seat occupancy system, wherein the output of the seat occupancy system is based on at least one of the pose detection, the second body bounding area, and the second face bounding area. In yet some embodiments, the method is performed at a periodicity and/or in response to a person-to-seat assignment change of any of the seats in the vehicle.

Another aspect concerns a seat occupancy system in a vehicle comprising a seat assignment logic, the seat occupancy system being adapted to perform the method described herein. In embodiments, the seat assignment logic of the seat occupancy system is updated based on the determined pose, in response to determining the pose of the person. In further embodiments, updating the seat assignment logic comprises adapting at least one position of a corners and/or an edge of a seat bounding area according to at least the second body bounding box. In yet further embodiments, updating the seat assignment logic comprises adapting parameters associated to corners and/or edges of the seat bounding area according to at least the second body bounding box.

Yet another aspect concerns a vehicle that comprises a camera for taking images of an interior of the vehicle and the seat occupancy system as described herein.

Finally, a computer program is presented that comprises instructions which, when the program is executed by a computer, cause the computer to carry out the methods described herein.

Further refinements are set forth by the dependent claims.

These and other objects, embodiments and advantages will become readily apparent to those skilled in the art from the following detailed description of the embodiments having reference to the attached figures, the disclosure not being limited to any particular embodiments.

### BRIEF DESCRITPTION OF THE DRAWINGS

The foregoing and further objects, features and advantages of the present subject matter will become apparent from the following description of exemplary embodiments with reference to the accompanying drawings, wherein like numerals are used to represent like elements, in which:
Fig. 1 is a basic flow chart of the method disclosed herein.
Fig. 2A depicts an image of an interior of a vehicle showing people on seats.
Fig. 2B depicts the same image as Fig. 2A, additionally with reference face bounding areas and reference body bounding areas.
Fig. 3 shows an overview on how the reference bounding areas and/or reference characteristics may be obtained.
Fig. 4 presents the image of Fig. 2A with current face bounding areas and current body bounding areas.
Fig. 5A shows embodiments of how it may be determined whether the person is leaning.
Fig. 5B depicts an illustration of a reference body and face bounding box and two possible current body and face bounding boxes.
Figs. 6A and 6B present an example of different current bounding areas when the person is leaning to the right.
Figs. 7A and 7B present an example of different current bounding areas when the person is leaning to the front.
Fig. 8 depicts an embodiment of how updating a seat bounding area may be achieved.
Figs. 9A and 9B present an example on updating the seat bounding area.
Fig. 10 is diagrammatic representation of a computing system implementing the functionalities described herein.

### DETAILED DESCRIPTION

The present disclosure relates to methods and systems of leaning detection in collaboration with a seat occupancy classification system that improves the safety of smart vehicles, such as cars, trains, busses, ships, and the like.

Smart vehicles already improve the safety of passengers as they detect an occupancy state of vehicle's seats. However, people do not sit motionless in cars, but typically move. Such movements may lead to false seat assignments and, thus, to false seat occupancy states. Since seat occupancy states are used, e.g., to control safety in the vehicle, such as airbag regulation, door locking, and/or seatbelt tensioning control, it is relevant to have a reliable seat assignment system in a seat occupancy system.

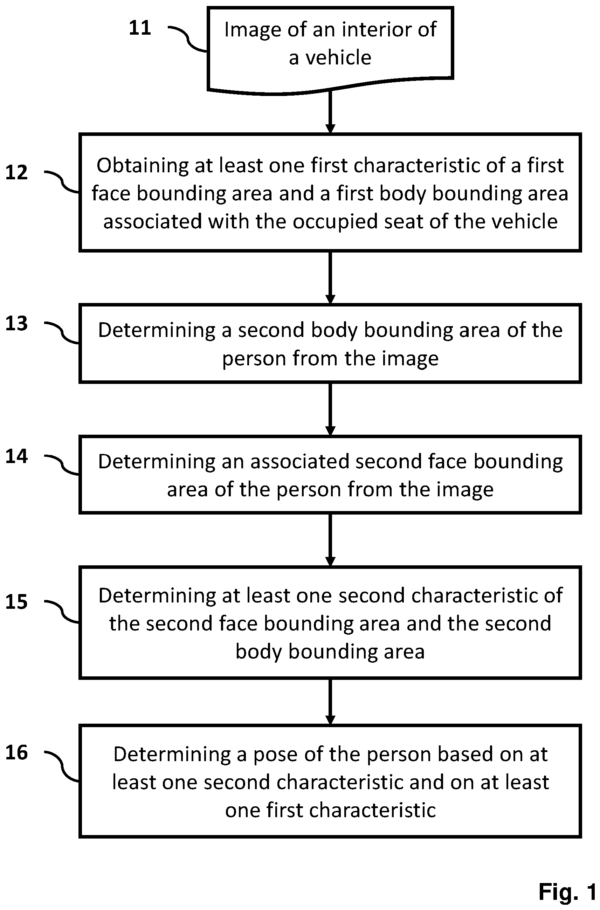

Fig. 1 is a basic flow chart of pose detection. The term pose relates to a body posture of the person occupying the vehicle seat. For example, the person may sit in an upright position on the seat. However, the person may also lean into a certain direction to a certain degree, e.g. to the left or to the right, and/or to the front. The present methodologies are directed to determining the body posture of the person on the seat, the determination result being utilized for vehicle assistance and/or control purposes such as detecting which seat is occupied by which person and controlling functionalities such as seat belts or airbags of the vehicle accordingly.

The method starts with receiving an image 11 of an interior of the vehicle showing a seat of the vehicle occupied by a person. The image 11 is also referred to as a current image because it is the latest image of the vehicle's interior, e.g., captured in the last time frame, and may show more than one person on more than one seat. This is not excluded in embodiments focusing on the leaning detection for the (one) person on the (one) seat. Hence, if there are more persons on the image, the method may be performed for each person on each seat or for a particular person of the multiple persons on a on a particular seat.

The image 11 is taken by an on-board camera of the vehicle. Such a camera is usually located in the middle of the front window above or below the rear mirror but may also be located at a different position. The camera may be an RGB camera, i.e., an imager that collects visible light (400~700nm) and converts that to an electrical signal, then organizes that information to render images and video streams, an infrared camera, or a mixture of both (RGB-IR). The image 11 may also be processed by other modules of the vehicle, in particular, by modules of a seat occupancy system.

The method further comprises in box 12 obtaining first characteristics of a first face bounding area and a first body bounding area associated with the occupied seat of the vehicle. The first characteristics and first bounding areas are also referred to as reference characteristic and reference bounding area. In other words, the method comprises obtaining reference characteristics of a reference face bounding area and a reference body bounding area associated with the seat of the vehicle. Obtaining is to be understood broadly. Hence, obtaining may comprise retrieving the reference face bounding area and reference body bounding area from a storage and calculating or determining the reference characteristics after retrieving the reference bounding areas. Obtaining may also comprise retrieving the reference characteristics from a storage, wherein the reference characteristics were determined before from the reference bounding areas.

The reference characteristics relate to a position and an area of the reference face bounding area. Additionally or alternatively, the reference characteristics relate to a position and an area of the reference body bounding area. For example, the reference characteristics may be the x and y value of the middle position of the reference bounding areas. In this example, the reference characteristics comprise four reference characteristics, namely, the x value and the y value of the center position of the reference face bounding area and the x value and the y value of the center position of the reference body bounding area. In another example, the reference characteristics may consist of six reference characteristics, namely, the x and y value of the center position of the reference bounding areas as in the example before and, additionally, the areas covered by the reference bounding areas. Any other combinations or other values relating to the position (i.e., corner coordinates etc.) may be obtained, too.

A bounding area is a 2D area around an object. In the present disclosure, bounding areas are determined around bodies and faces detected on images of the interior of the vehicle. A bounding area may be a rectangle, i.e., a bounding box, any kind of polygon, or even a circle. Bounding boxes are defined by at least a width, a height, a center x position, and a center y position relative to an image taken by the on-board camera. The bounding area may be a minimum bounding area, i.e., the smallest area with the defined shape (and in some embodiments also orientation) around the body or face of the person or, e.g., around a seat. For determining bounding areas, e.g., bounding boxes around the body or face of a person, a YOLO (you only look once) algorithm may be used. Other machine learning algorithms or conventional image processing and recognition algorithms may be used, too.

In box 13, the method determines a second body bounding area of the person from the image. The second body bounding area is herein also referred to as a current body bounding area, which is determined around a body of the person based on the current image 11. Therefore, as explained above, algorithms for object detection and bounding area determination can be applied to determine the current body bounding area. In some embodiments, the current body bounding area may be determined by modules of the seat occupancy system.

In box 14, the method determines an associated second face bounding area of the person from the image. The second face bounding area is also referred to as a current face bounding area determined around a face of the person based on the current image 11. Therefore, as explained above, algorithms for object detection and bounding area determination can be used to determine the current face bounding area. In some embodiments, the current face bounding area may be determined by modules of the seat occupancy system.

Based on the determined current bounding areas around the face and the body, the method determines in box 15 second characteristics, i.e., current characteristics, of the second face bounding area and the second body bounding area. The current characteristics relate to the position and area of the current face bounding area and/or current body bounding area. Hence, in some embodiments, the determination of the current characteristics may be analogue to the determination of the reference characteristics of box 12.

Finally, the method comprises in box 16 determining a pose of the person based on the second characteristics and on the first characteristics. A pose may comprise a leaning to a direction. The direction may comprise left, right, forward, or backward. Additionally or alternatively, the direction may comprise diagonally left forward, diagonally right forward, and the like. Other poses may comprise kneeling, laying, and the like.

As will be apparent to the skilled person, the order of the processed depicted in boxes 11 to 15 can be different compared to the order shown in Fig. 1. For example, obtaining reference characteristics of box 12 can be done once and before executing the further processes, i.e., also before receiving the current image 11. Alternatively, obtaining reference characteristics of box 12 can be done after determining the current body and face bounding areas (boxes 13 and 14) and/or after box 15, i.e., after determining the current characteristics. Changing the order of processes depicted in boxed 13 and 14 is also apparent to the skilled person. In summary, when describing a method that comprises specific processes, reordering of the processes is to be understood to be comprised as long as no technical hurdle contradicts a reordering.

The method of Fig. 1 may be performed at a periodicity, e.g., every 10 seconds, every minute, or the like. The periodicity may be pre-defined and/or configurable by a passenger. Periodic execution in short intervals can assure that a seat bounding area associated to a respective seat is always up to date according to a determined leaning of a person sitting on that seat. Hence, the seat occupancy system can more reliably assign persons to seats.

Alternatively or additionally, the method of Fig. 1 may also be executed in response to a person-to-seat assignment change of any of the seats in the vehicle. For example, if the seat occupancy system detects a movement of a person from one seat to another, i.e., assigns the person to another seat than previously, the method may be executed in order to determine whether the person is leaning towards the other seat, but actually still sitting on the previously assigned seat, or whether the person has really moved to the other seat. Since the seat occupancy system is used to control safety functions in the vehicle, such as airbag or belt control, the leaning detection may be at least indirectly also be used to control the safety functions, i.e. for controlling the airbag strength according to the leaning direction.

The output of the seat occupancy system can also comprise knowledge derived from the leaning detection as described herein, e.g., in order to present a seat occupancy status of a seat to the passengers and/or driver of the vehicle on a display. The output of the seat occupancy system may in such an example be based on at least one of the leaning detection, the current body bounding area, and the current face bounding area. In some embodiments, a smart display, an infotainment system, or another media system in the vehicle may then present the passengers with a seat occupancy status of the seats and, e.g., may indicate whether the person-to-seat assignment was based on a leaning detection. If the leaning detection and/or the person-to-seat assignment is uncertain (e.g., a confidence value is below a threshold or the like), the passengers could interact with the media system in order to change or verify the assignment manually.

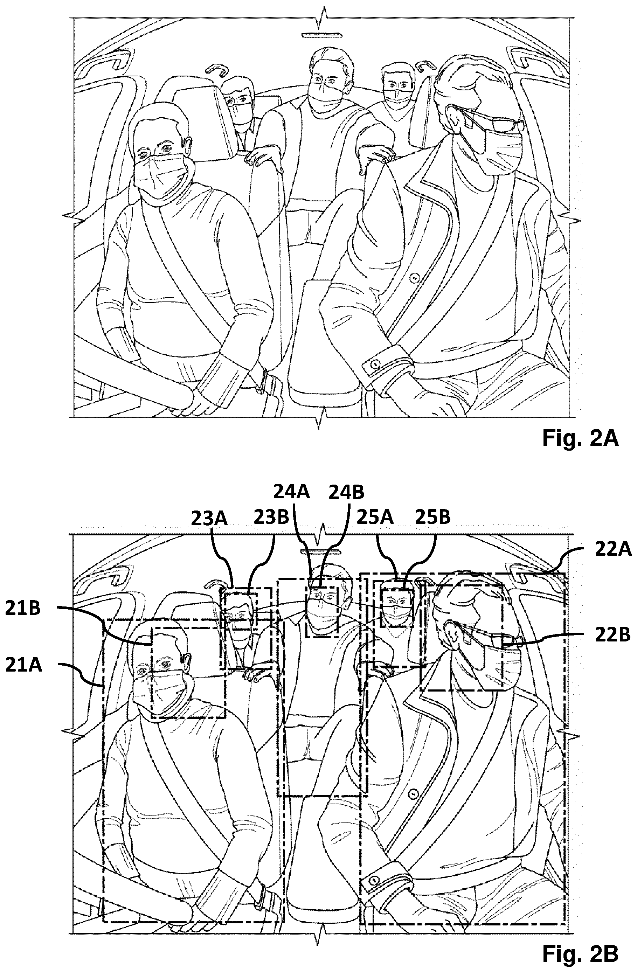

Fig. 2A depicts an image of an interior of a vehicle showing people on seats. In this example, this image may correspond to the current image 11. Five persons are sitting on the five seats of the vehicle. The driver seat is on the left-hand side in the front, the passenger seat to the right of the driver seat, and the three rear seats are behind the two front seats.

Fig. 2B depicts the same image as Fig. 2A but with additional reference face bounding areas and reference body bounding areas; in this example, but not limiting, the bounding areas shown are bounding boxes. Although the bounding areas are not determined based on the current image but on at least one reference image, e.g., previously taken from the on-board camera, the reference bounding areas are for highlighting purposes depicted within the current image. As can be seen, the reference bounding areas are not bounding areas of the persons in the current image. E.g., the driver's reference body bounding area 21A and the driver's reference face bounding area 21B are shifted a little to the right, since the driver is leaning slightly to the left (from the camera's view). The co-driver's reference body bounding area 22A and the co-driver's reference face bounding area 22B do also not completely surround the body or face of the co-driver. Further smaller discrepancies can also be seen for the other passengers' reference bounding areas 23A, 23B, 24A, 24B, 25A, and 25B.

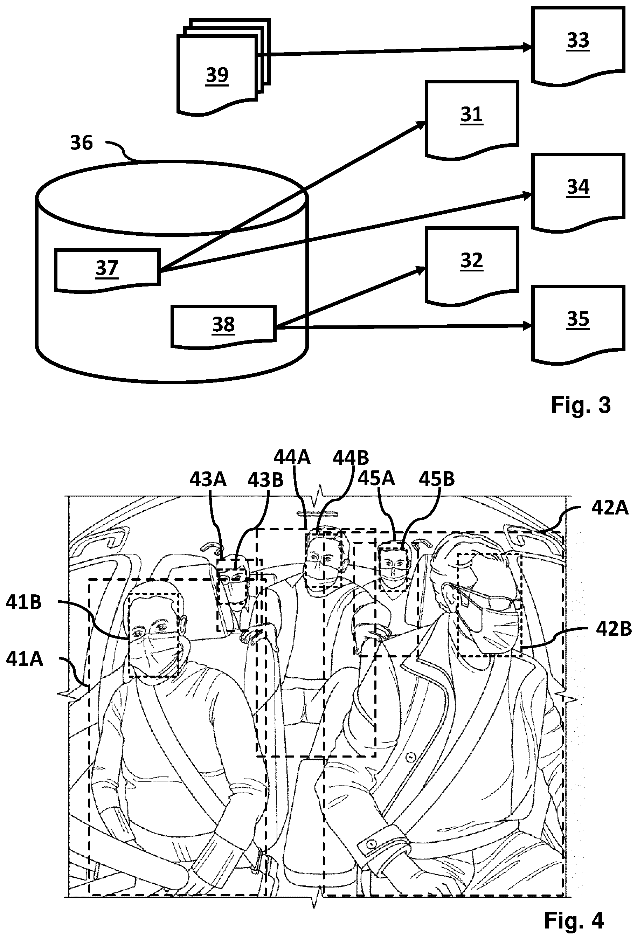

According to the method described with respect to Fig. 1, the reference characteristic(s) of the reference bounding area(s) have to be obtained in box 12. There are different approaches how these can be obtained, which are presented in Fig. 3. In this example, it is assumed that reference characteristics for five passenger seats in a vehicle shall be received (i.e., performing the method of Fig. 1 five times). These are reference characteristic 31 for the driver's seat, reference characteristic 32 for the co-driver's seat, reference characteristic 33 for the left rear seat (from camera perspective), reference characteristic 34 for the middle rear seat, and reference characteristic 35 for the right rear seat.

In the example of Fig. 3, the reference characteristic 31 may be retrieved from a storage or memory 36 based on a facial identification of the person. Facial identification, briefly referred to as faceID, uses biometric recognition on persons' faces in the vehicle. With the help of faceID, a unique identifier can be associated with a person and with the biometrics of this person. This enables to individually adapt the vehicle's features to the person, e.g., moving the driver's seat in the correct position, loading the driver's profile on a display in the vehicle, i.e., on the vehicle's infotainment system, or the like. FaceID can also be used to store and retrieve reference characteristic(s) of reference bounding area(s) of a specific passenger sitting on a specific seat, e.g., stored reference characteristics 37. In the example of Fig. 3, the reference characteristic 34 of the middle rear seat, e.g., the already known child of the driver, is obtained in the same way.

As depicted in Fig. 3, reference characteristics of other seats can be retrieved differently. In the example of Fig. 3, the reference characteristic 32 associated with the co-driver's seat may also be retrieved from the memory 36 but not by using a faceID but only the location or identification of the respective seat. The reference characteristic 32 may then be determined based on a mean position and/or area of a historical reference bounding areas determined for one or more persons that were historically, e.g., in the last days, weeks, months etc., sitting on the respective seat, e.g., stored reference characteristics 38. In the example of Fig. 3, the reference characteristic 35 of the right rear seat is obtained in the same way.

One further example of obtaining the reference characteristic(s) is determining the reference characteristic(s) based on a mean position and/or mean area of bounding areas determined on a plurality of images of the interior of the vehicle for the person on the seat in an initialization period. In the example of Fig. 3, the reference characteristic 33 is determined by considering images 39 taken by the on-board camera during the initialization period. The initialization period may be a period after starting the computing systems of the vehicle, e.g., after opening the door or after starting the engine. Alternatively, the initialization period may also be a period during use of the vehicle, e.g., started by a passenger via a smart display/driving assistance infotainment system or starting by the seat occupancy system if seat occupancy detection has failed, led to uncertain states or was corrected by a passenger several times.

However, although not shown in Fig. 3, reference characteristics 31, 32, 33, 34, and 35 of the seats may also all be obtained similarly, e.g., all based on faceID if available, all based on historical mean bounding boxes on the respective seat if available, or all based on bounding boxes determined on images taken during an initialization period. Moreover, in some embodiments, the storages do not store the reference characteristics as such but the (mean) reference bounding areas. In such embodiments, obtaining the reference characteristics comprises, after retrieving the mean reference bounding areas from the memory 36, determining the reference characteristics from the stored reference bounding areas.

The method of Fig. 1 also comprises - in boxes 13 and 14 - determining current face and body bounding areas. Fig. 4 presents an example on how the current face bounding areas and current body bounding areas, in this example again bounding boxes, may look like in the image of Fig. 2A. The driver's body bounding box 41A and her face bounding box 41B are now aligned with the body and the face. The same is true for all other body bounding boxes 42A, 43A, 44A, and 45A, as well as for all other face bounding boxes 42B, 43B, 44B, and 45B.

Based on current characteristics of at least one current bounding area 41A, 41B, 42A, 42B, 43A, 43B, 44A, 44B, 45A, and 45B associated to a seat and on reference characteristics of at least one reference bounding area 21A, 21B, 22A, 22B, 23A, 23B, 24A, 24B, 25A, and 25B, it can now be determined whether the person is leaning.

For example, consider the person on the middle rear seat. The areas covered by the reference body bounding box 24A and the reference face bounding box 24B are smaller than the areas covered by the current body bounding box 44A and the current face bounding box 44B. Hence, based on this, it can be determined that the person is - at least slightly - leaning to the front. Or consider the driver. It can be determined that she is leaning to the left based on the change of the current body bounding box 41A and the current face bounding box 41B with respect to the center position of the reference body bounding box 21A and the reference face bounding box 21B.

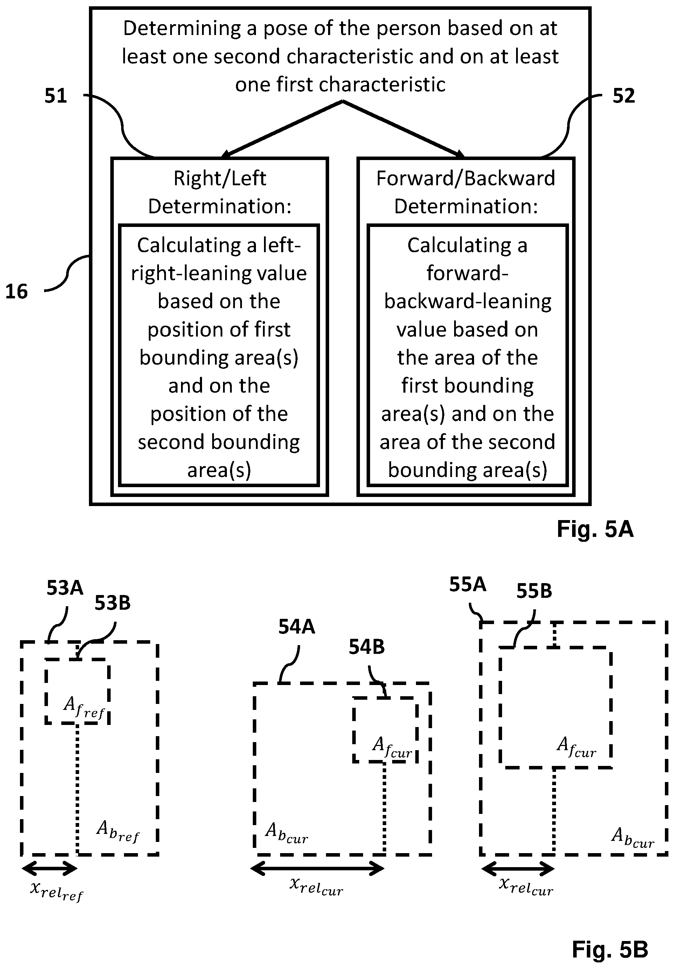

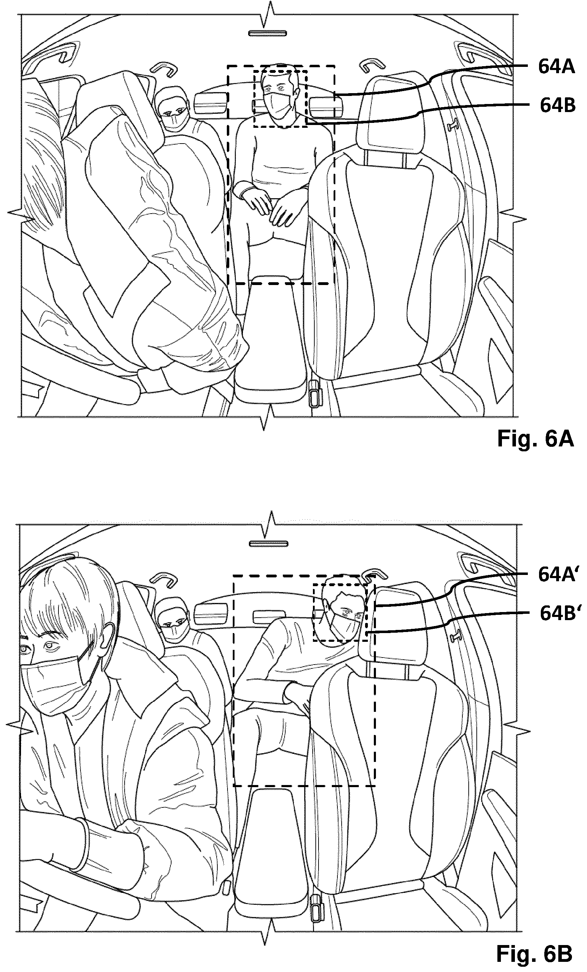

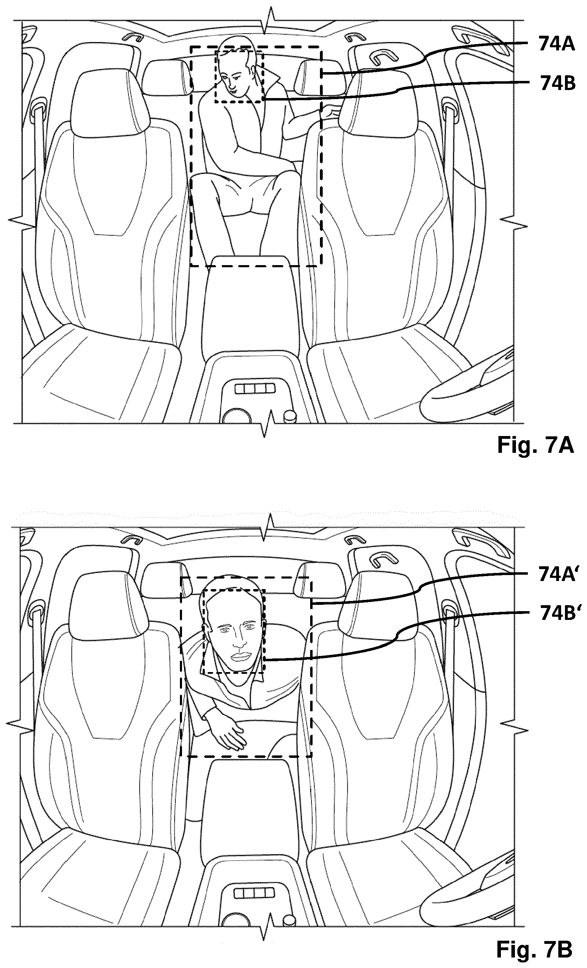

Fig. 5A depicts a simplified diagram of how it may be determined whether the person is leaning when determining the pose of the person, e.g., a further refinement of box 16 as also presented in Fig. 1. Specific examples on how the leaning may be determined will be described in the following on the examples of Figs. 6A and 6B and Figs. 7A and 7B.

Determining whether the person is leaning may comprise two determination steps, one for determining whether the person is leaning to the right or to the left, which is shown in box 51, and one for determining whether the person is leaning to the front or to the back, which is shown in box 51. Although both determination processes are depicted in Fig. 5A, a leaning determination according to the methods described herein may also comprise one of both or even none of both but another leaning determination process, e.g., one process determining the leaning direction in 3D, e.g., right, left, front, backward, diagonally, and the like.

The right/left determination as shown in box 51 comprises calculating a left-right-leaning value based on the position of first bounding area(s) and on the position of the second bounding area(s), e.g., calculating a left-right-leaning value of the person based on at least one of the center position of the reference face bounding area and the reference body bounding area, and on at least one of the center position of the current face bounding area and the current body bounding area. Based on the left-right-leaning leaning value, it is then determined that the person is leaning to the right or to the left. Different calculations may be considered. Fig 5B illustrates bounding boxes for the following explanations.

For example, the reference characteristic may be determined as the center x-position of the reference face bounding box relative to the reference body bounding box. Such a reference characteristic *x_{rel_{ref}}* is depicted on the left-hand side of Fig. 5B for the reference body bounding box 53A and reference face bounding box 53B. The current characteristic may be determined as the center x-position of the current face bounding box relative to the current body bounding box, which is also depicted as *x_{rel_{cur}}* for the two exemplary current body bounding boxes 54A and 55A with their respective current face bounding boxes 54B and 55B.

The left-right-leaning value *P_{leanᵣₗ}* may then be determined by: ${P}_{{lean}_{rl}} = {x}_{{rel}_{cur}} - {x}_{{rel}_{ref}}$ (1) In this example, if the left-right-leaning value *P_{leanᵣₗ}* is negative, the person is determined to be leaning to the left, if the left-right-leaning value *P_{leanᵣₗ}* is positive the person is determined to be leaning to the right, which is e.g. the case for the current body bounding box 54A and face body bounding box 54B relative to the reference bounding boxes 53A and 53B. Hence, a mathematic sign of the left-right leaning value indicates the direction of leaning. Moreover, the left-right leaning value also indicates the extent of the leaning.

In some embodiments, a threshold is set in order to determine that a person is leaning, i.e., to prevent that also small deviations are already determined as leaning, i.e., the small deviation of the current bounding boxes 55A and 55B with respect to the reference bounding boxes 53A and 53B. For example, if the left-right-leaning value *P_{leanᵣₗ}* can usually take values between -5 and +5, a possible threshold may be set to 1. This means, an unsigned left-right-leaning value |*P_{leanᵣₗ}*| that is larger than the threshold will lead to a person being determined as leaning.

In a more specific example, a weighting parameter may also be applied to the above-mentioned formula (1) in order to also take the size or position of the bounding boxes into account. This may, e.g., be the case of bounding boxes 55A and 55B in Fig. 5B. For example, the weighting parameter may be based on the expansion in x-direction of the reference body bounding box (*x_{expref}*), the area covered by the reference body bounding box (*A_{b_{ref}})* and/or of the current body bounding box (*A_{bcur}*), or the x-position of the reference face bounding box relative to the reference body bounding box, i.e., the reference characteristic (*x_{relref}*). Further factors *f,* e.g. 0.1, 0.5, 2, or the like, can be used to normalize the values of *P_{leanᵣₗ}.* Possible formulas are: ${P}_{{lean}_{rl}} = \frac{{x}_{{rel}_{cur}} - {x}_{{rel}_{ref}}}{f ∗ {x}_{{exp}_{ref}}}$ (2) ${P}_{{lean}_{rl}} = \frac{{x}_{{rel}_{cur}}}{{A}_{{b}_{cur}}} - \frac{{x}_{{rel}_{ref}}}{{A}_{{b}_{ref}}}$ (3) ${P}_{{lean}_{rl}} = \frac{{x}_{{rel}_{curr}} - {x}_{{rel}_{ref}}}{f ∗ {A}_{{b}_{ref}}}$ (4) ${P}_{{lean}_{rl}} = \frac{{x}_{{rel}_{cur}} - {x}_{{rel}_{ref}}}{f ∗ {x}_{relref}}$ (5)

The forward/backward determination as shown in box 52 comprises calculating a forward-backward-leaning value based on the area of the first bounding area(s) and on the area of the second bounding area(s), e.g., calculating a forward-backward-leaning value of the person based on at least one of the area of the reference face bounding area and the area of the reference body bounding area, and on at least one of the area of the current face bounding area and area of the current body bounding area. Based on this leaning value, it is then determined that the person is leaning to the front or to the back. Different calculations may be considered. Fig 5B also illustrates bounding boxes for the following explanations.

For example, the reference characteristic may be determined as the area covered by the reference face bounding box *A_{f_{ref}}* relative to the area covered by the reference body bounding box *A_{bᵣₑₜ}*, as also illustrated in Fig. 5B for bounding boxes 53A and 53B. The current characteristic may be determined as the area covered by the current face bounding box *A_{f_{cur}}* relative to the area covered by the current body bounding box *A_{b_{cur}},* as also illustrated in Fig. 5B for bounding boxes 54A, 54B, 55A, and 55B. The forward-backward-leaning value *P_{lean_{fb}}* may then be determined by: ${P}_{{lean}_{fb}} = \frac{{A}_{{f}_{cur}}}{{A}_{{b}_{cur}}} - \frac{{A}_{{f}_{ref}}}{{A}_{{b}_{ref}}}$ (6) In this example, if the forward-backward-leaning value *P_{lean_{fb}}* is negative, the person is determined to be leaning to the back, if the forward-backward-leaning value *P_{lean_{fb}}* is positive the person is determined to be leaning to the front. Hence, a mathematic sign of the forward-backward-leaning value indicates the direction of leaning. Moreover, the forward-backward-leaning value also indicates the extent of the leaning.

In some embodiments, a threshold is set in order to determine that a person is leaning, i.e., to prevent that also small deviations are already determined as leaning. For example, if the forward-backward-leaning value *P_{lean_{fb}}* can usually take values between -0.5 and +0.5, a possible threshold may be set to 0.1. This means, an unsigned forward-backward-leaning value |*P_{lean_{fb}}*| that is larger than the threshold will lead to a person being determined as leaning.

In some embodiments, determining whether the person is leaning to the front or to the back may additionally take the current body bounding box side ratio into account. For example, if the sides are almost equal, i.e., a ratio 1:1 and the forward-backward-leaning value indicates a forward leaning, the person may be more reliably determined as leaning to the front, which is the case for the current body bounding box 55A of Fig. 5A. Otherwise, e.g., if the ratio is 2:1 (like for the reference body bounding box 53A) but the forward-backward-leaning value indicates a forward leaning, the person may not be determined as leaning to the front.

Figs. 6A and 6B present an example of different current bounding areas when the person is leaning to the right. It is assumed that the current body bounding area 64A of Fig. 6A is very similar to the reference body bounding area. It is further assumed that the current face bounding area 64B of Fig. 6A is also very similar to the reference face bounding area. Hence, when the current bounding areas of Fig. 6A are determined and the respective current characteristics are compared to the reference characteristics, the method of Fig. 1 will determine that the person is not leaning.

In contrast to the case of Fig. 6B. There, the current body bounding box 64A' and the current face bounding boy 64B' have changed their shape and position. Hence, the method as described herein will determine that the person is leaning to the right.

Figs. 7A and 7B present an example of different current bounding areas when the person is leaning to the front. It is assumed that the current body bounding area 74A of Fig. 7A is very similar to the reference body bounding area. It is further assumed that the current face bounding area 74B of Fig. 7A is also very similar to the reference face bounding area. Hence, when the current bounding areas of Fig. 7A are determined and the respective current characteristics are compared to the reference characteristics, the method of Fig. 1 will determine that the person is not leaning.

In contrast to the case of Fig. 7B. There, the current body bounding box 74A' and the current face bounding boy 74B' have changed their shape and position. Hence, the method as described herein will determine that the person is leaning to the front.

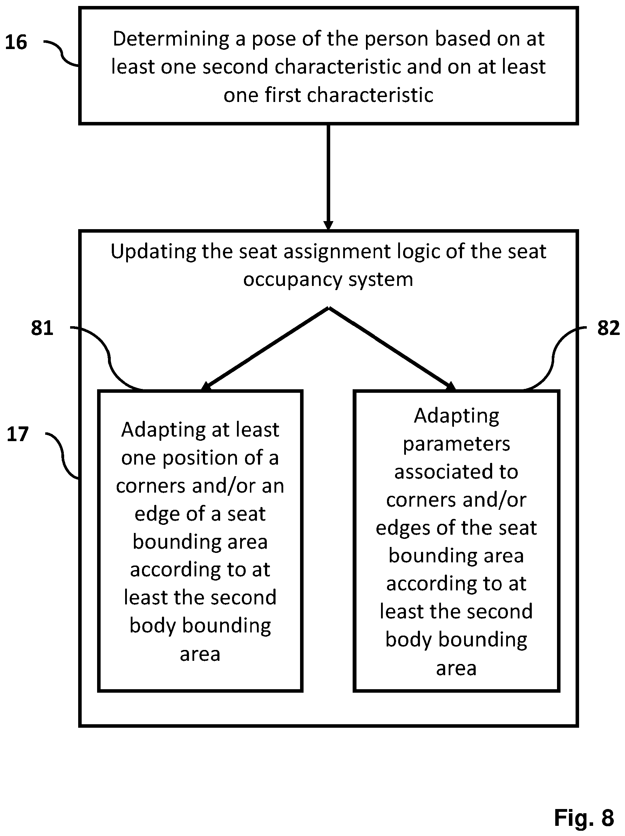

As explained above, the seat occupancy system is applied for the seat on a seat bounding area. This seat bounding area lies within images taken by the on-board camera. The leaning detection method of Fig. 1 may in one embodiment be used to update the seat bounding area associated with the seat in order to improve the seat occupancy detection and person-to-seat assignment when executed the next time. Fig. 8 depicts embodiments of how such an update of a seat bounding area may be achieved.

After determining that the person is leaning, e.g., after determining the pose in box 16 (as also depicted in Fig. 1), the seat assignment logic of a seat occupancy system is updated in box 17. Seat assignment logics of seat occupancy system determine whether a person or an object is to be assigned to a seat for determining a seat occupancy state of the seat. Different updates of such seat assignment logics may be considered, e.g., at least one of adapting corners and/or edges of the seat bounding area according to at least the second body bounding box (shown in box 81) and adapting parameters associated to corners and/or edges of the seat bounding area according to at least the second body bounding box. (shown in box 82). Although both updating processes are depicted in Fig. 8, an update according to the methods described herein may also only comprise one of them or even none of them but another update process, e.g., adapting parameters and corners at the same time or reshaping the bounding boxes or the like.

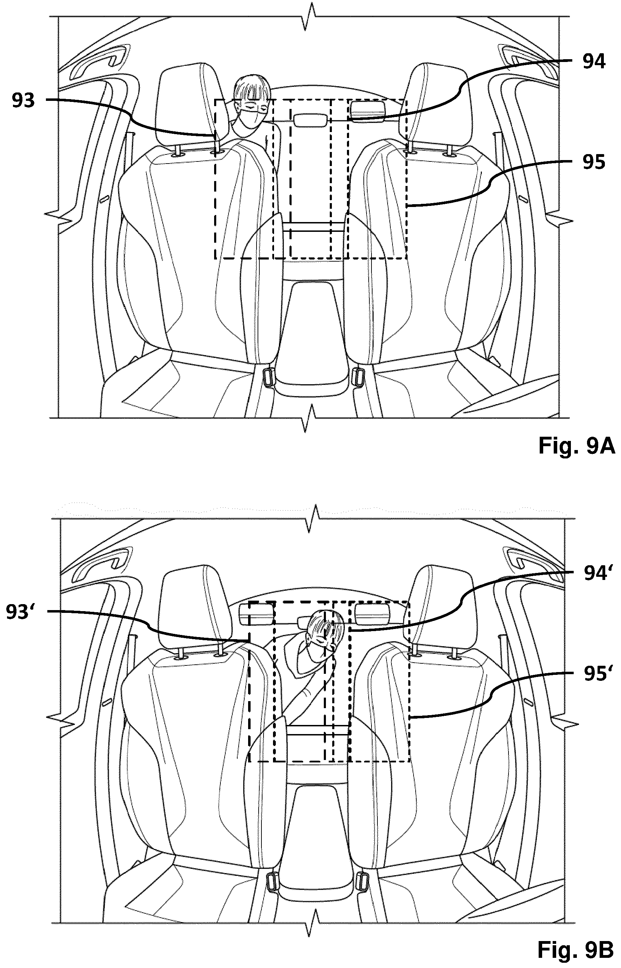

Adapting corner and/or edges of the seat bounding area, i.e., the process of box 81, is further illustrated in Figs. 9A and 9B on the example of the rear seats. The left rear seat is associated to the seat bounding area 93, the middle rear seat is associated to the seat bounding area 94 and the left rear seat is associated with the seat bounding area 95, which are shown in Fig. 9A. In Fig. 9B, the seat bounding area 95' associated with the left rear seat is moved to the right, since the person is leaning to the right. How much the corners and/or edges of the seat bounding area 95' are moved to the right may be depending on the current body bounding area and/or the current face bounding area, e.g., relative to movement with respect to the previous or reference body and face bounding areas.

Adapting parameters associated to corners and/or edges of the seat bounding area, i.e., the process of box 82, may leave the corners and/or edges on the same positions as before, e.g., like shown in Fig. 9A, but reduces weight or parameters associated to the corners and/or edges so that a detected person, who can not clearly be assigned to the seat bounding area because he/she exceeds the seat bounding area exactly at the side/direction to which the person was determined to be leaning, can be clearly assigned as the exceeding on this side is weighted to be of less relevance for the seat occupancy system.

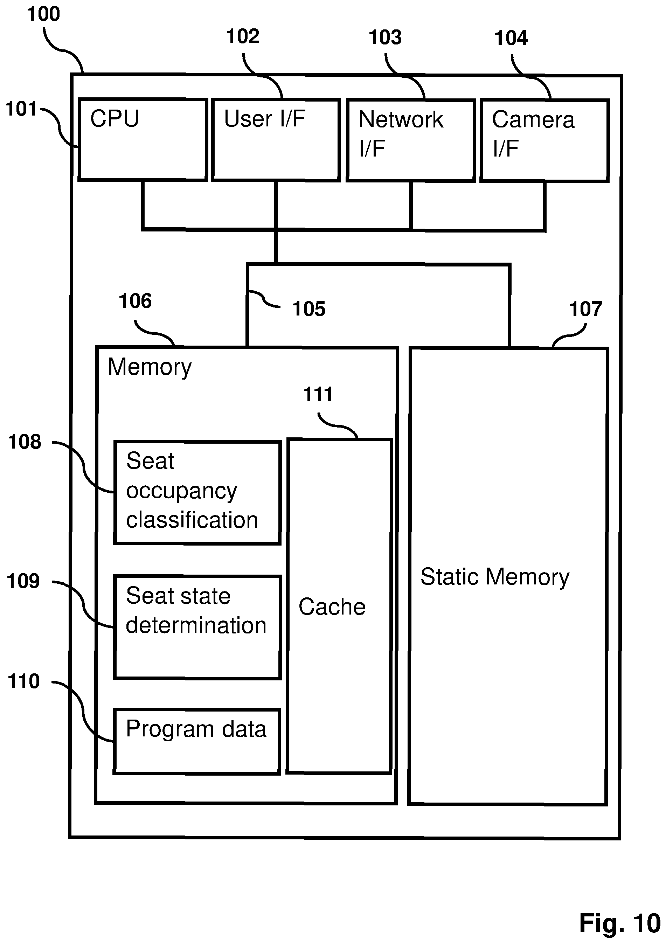

Fig. 10 is a diagrammatic representation of internal components of a computing system 100 implementing the functionality as described herein. The computing system 100 may be located in the vehicle and includes at least one processor 101, a user interface 102, a network interface 103 and a main memory 106, that communicate with each other via a bus 105. Optionally, the computing system 100 may further include a static memory 107 and a disk-drive unit (not shown) that also communicate with each via the bus 105. A video display, an alpha-numeric input device and a cursor control device may be provided as examples of user interface 102.

Furthermore, the computing system 100 may also comprise a specified camera interface 104 to communicate with an on-board camera of the vehicle. Alternatively, the computing system 100 may communicate with the camera via the network interface 103. The camera is used for taking the current image 1. The computing system 100 may also be connected to database systems (not shown) via the network interface, wherein the database systems store at least part of the images needed for providing the functionalities described herein.

The main memory 106, which may correspond to the memory 36 depicted in Fig. 3, may be a random-access memory (RAM) and/or any further volatile memory. The main memory 106 may store program code for the seat occupancy classification system 108 and the seat state determination system 109. The memory 106 may also store additional program data required for providing the functionalities described herein. Part of the program data 110, the seat state determination system 109 and/or the seat occupancy classification system 108 may also be stored in a separate, e.g., cloud memory and executed at least in part remotely. In such an exemplary embodiment, the memory 106 may store at least one of current occupancy states, reference bounding areas, reference characteristics, faceID, and the like according to the methods describes herein. These may also be stored in a cache 111, which may again be located in a local or remote location.

According to an aspect, a vehicle is provided. The herein described seat state assignment method may be stored as program code 109 and may be at least in part comprised by the vehicle. The seat occupancy system may be stored as program code 108 and may also at least in part be comprised by the vehicle. Parts of the program code 108 may also be stored and executed on a cloud server to reduce the computational effort on the vehicle's computing system 100. The vehicle may also comprise a camera, e.g., connected via the camera interface 104, for capturing the current image 11.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computer-implemented method of pose detection of a person in a vehicle comprising:
- receiving (11), from an on-board camera, an image of an interior of the vehicle showing a seat of the vehicle occupied by the person;
- obtaining (12) first characteristics of a first face bounding area (64B, 74B) and a first body bounding area associated with the occupied seat of the vehicle, wherein the first characteristics relate to a position and an area of a reference face bounding area (21B, 22B) and/or the first characteristics relate to a position and an area of a reference body bounding area (21A, 22A);
- determining (13, 14) a second body bounding area and an associated second face bounding area (64B, 74B) of the person from the image;
- determining (15) second characteristics of the second face bounding area (64B, 74B) and the second body bounding area, wherein the second characteristics relate to a position and an area of current face bounding area (64B, 74B) and/or the second characteristics relate to a position and an area of a current body bounding area (64A, 74A); and
- determining (16) a pose of the person based on the second characteristics and on the first characteristics;
wherein a bounding area is a 2D area around an object, and wherein the bounding area is a bounding box defined by at least a width, a height, a center x position, and a center y position relative to an image taken by the on-board camera.

2. The method of claim 1, wherein obtaining (12) the first characteristics comprises retrieving the first face bounding area (64B, 74B) and the first body bounding area from a first memory based on a facial identification of the person.

3. The method of claim 1 or claim 2, wherein obtaining (12) the first characteristics comprises retrieving the first face bounding area (64B, 74B) and the first body bounding area from a second memory, wherein the first face bounding area (64B, 74B) and the first body bounding area are determined based on a mean position and/or mean area of face bounding areas (64B, 74B) and body bounding areas historically captured for persons on the seat.

4. The method of any one of claims 1 to 3, wherein obtaining (12) the first characteristics comprises determining the first face bounding area (64B, 74B) and the first body bounding area based on a mean position and/or mean area of face bounding areas (64B, 74B) and body bounding areas captured on a plurality of images (39) of the interior of the vehicle for the person on the seat in a certain initialization period.

5. The method of any one of the preceding claims, wherein the at least one characteristic comprises a position of a face bounding area (64B, 74B) and a position of a body bounding area, and wherein determining the pose of the person comprises:
- calculating a left-right-leaning value of the person based on the position of the first face bounding area (64B, 74B) and the first body bounding area and the position of the second face bounding area (64B, 74B) and the second body bounding area; and
- determining that the person is leaning to the right or to the left based on the left-right-leaning value.

6. The method of any one of the preceding claims, wherein the at least one characteristic comprises an area covered by a face bounding area (64B, 74B) and an area covered by a body bounding area, and wherein determining the pose of the person comprises:
- calculating a forward-backward-leaning value of the person based on at least two of the area of the first face bounding area (64B, 74B), the area of the first body bounding area, the area of the second face bounding area (64B, 74B), and area of the second body bounding area; and
- determining that the person is leaning forward or backward based on the forward-backward-leaning value.

7. The method of any one of the preceding claims, wherein the pose detection for a seat occupancy system is used to control safety functions in the vehicle.

8. The method of any one of the preceding claims, wherein a graphical representation on a display within the vehicle is based on an output of a seat occupancy system, wherein the output of the seat occupancy system is based on at least one of the pose detection, the second body bounding area, and the second face bounding area (64B, 74B).

9. The method of any one of the preceding claims, wherein the method is performed at a periodicity and/or in response to a person-to-seat assignment change of any of the seats in the vehicle.

10. A seat occupancy system in a vehicle comprising a seat assignment logic, the seat occupancy system being adapted to perform the method of any one of the preceding claims.

11. The seat occupancy system of claim 10, wherein, in response to determining the pose of the person, the seat assignment logic of the seat occupancy system is updated based on the determined pose.

12. The seat occupancy system of claim 11, wherein updating the seat assignment logic comprises adapting at least one position of a corners and/or an edge of a seat bounding area (93-95, 95') according to at least the second body bounding box.

13. The seat occupancy system of claim 11 or 12, wherein updating the seat assignment logic comprises adapting parameters associated to corners and/or edges of the seat bounding area (93-95, 95') according to at least the second body bounding box.

14. A vehicle comprising:
- a camera for taking images (39) of an interior of the vehicle; and
- the seat occupancy system of any one of claims 10 to 13.

15. A computer program product comprising instructions, which, when executed on a computer, cause the computer to perform the method any one of claims 1 to 9.

## Patentansprüche

1. Ein computerimplementiertes Verfahren zur Posenerkennung einer Person in einem Fahrzeug, umfassend:
Empfangen (11), von einer Bordkamera, eines Bildes eines Innenraums des Fahrzeugs, das einen von der Person belegten Sitz des Fahrzeugs zeigt;
Erhalten (12) erster Eigenschaften eines ersten
Gesichtsbegrenzungsbereichs (64B, 74B) und eines ersten Körperbegrenzungsbereichs, die dem belegten Sitz des Fahrzeugs zugeordnet sind, wobei sich die ersten Eigenschaften auf eine Position und einen Bereich eines Referenzgesichtsbegrenzungsbereichs (21B, 22B) beziehen und/oder sich die ersten Eigenschaften auf eine Position und einen Bereich eines Referenzkörperbegrenzungsbereichs (21A, 22A) beziehen;
Bestimmen (13, 14) eines zweiten Körperbegrenzungsbereichs und eines zugeordneten zweiten Gesichtsbegrenzungsbereichs (64B, 74B) der Person aus dem Bild;
Bestimmen (15) zweiter Eigenschaften des zweiten Gesichtsbegrenzungsbereichs (64B, 74B) und des zweiten Körperbegrenzungsbereichs, wobei sich die zweiten Eigenschaften auf eine Position und einen Bereich eines aktuellen
Gesichtsbegrenzungsbereichs (64B, 74B) beziehen und/oder sich die zweiten Eigenschaften auf eine Position und einen Bereich eines aktuellen Körperbegrenzungsbereichs (64A, 74A) beziehen; und
Bestimmen (16) einer Pose der Person basierend auf den zweiten Eigenschaften und auf den ersten Eigenschaften;
wobei ein Begrenzungsbereich ein 2D-Bereich um ein Objekt herum ist, und
wobei der Begrenzungsbereich ein Begrenzungsrahmen ist, der durch mindestens eine Breite, eine Höhe, eine x-Zentrumsposition und eine y-Mittelposition relativ zu einem von der Bordkamera aufgenommenen Bild definiert ist.

2. Das Verfahren nach Anspruch 1, wobei das Erhalten (12) der ersten Eigenschaften das Abrufen des ersten Gesichtsbegrenzungsbereichs (64B, 74B) und des ersten Körperbegrenzungsbereichs aus einem ersten Speicher basierend auf einer Gesichtsidentifikation der Person umfasst.

3. Das Verfahren nach Anspruch 1 oder Anspruch 2, wobei das Erhalten (12) der ersten Eigenschaften das Abrufen des ersten Gesichtsbegrenzungsbereichs (64B, 74B) und des ersten Körperbegrenzungsbereichs aus einem zweiten Speicher umfasst, wobei der erste Gesichtsbegrenzungsbereich (64B, 74B) und der erste Körperbegrenzungsbereich basierend auf einer Durchschnittsposition und/oder Durchschnittsfläche von Gesichtsbegrenzungsbereichen (64B, 74B) und Körperbegrenzungsbereichen bestimmt werden, die in der Vergangenheit für Personen auf dem Sitz erfasst wurden.

4. Das Verfahren nach einem der Ansprüche 1 bis 3, wobei das Erhalten (12) der ersten Eigenschaften das Bestimmen des ersten Gesichtsbegrenzungsbereichs (64B, 74B) und des ersten Körperbegrenzungsbereichs basierend auf einer Durchschnittsposition und/oder Durchschnittsfläche von Gesichtsbegrenzungsbereichen (64B, 74B) und Körperbegrenzungsbereichen umfasst, die auf einer Vielzahl von Bildern (39) des Innenraums des Fahrzeugs für die Person auf dem Sitz in einer bestimmten Initialisierungsperiode erfasst wurden.

5. Das Verfahren nach einem der vorhergehenden Ansprüche, wobei die mindestens eine Eigenschaft eine Position eines Gesichtsbegrenzungsbereichs (64B, 74B) und eine Position eines Körperbegrenzungsbereichs umfasst, und wobei das Bestimmen der Pose der Person umfasst:
Berechnen eines Links-Rechts-Neigungswerts der Person basierend auf der Position des ersten Gesichtsbegrenzungsbereichs (64B, 74B) und des ersten Körperbegrenzungsbereichs und der Position des zweiten Gesichtsbegrenzungsbereichs (64B, 74B) und des zweiten Körperbegrenzungsbereichs; und
Bestimmen, dass sich die Person nach rechts oder nach links neigt, basierend auf dem Links-Rechts-Neigungswert.

6. Das Verfahren nach einem der vorhergehenden Ansprüche, wobei die mindestens eine Eigenschaft einen von einem Gesichtsbegrenzungsbereich (64B, 74B) abgedeckten Bereich und einen von einem Körperbegrenzungsbereich abgedeckten Bereich umfasst, und wobei das Bestimmen der Pose der Person umfasst:
Berechnen eines Vorwärts-Rückwärts-Neigungswerts der Person basierend auf mindestens zwei von dem Bereich des ersten Gesichtsbegrenzungsbereichs (64B, 74B), dem Bereich des ersten Körperbegrenzungsbereichs, dem Bereich des zweiten Gesichtsbegrenzungsbereichs (64B, 74B) und dem Bereich des zweiten Körperbegrenzungsbereichs; und
Bestimmen, dass sich die Person nach vorne oder nach hinten neigt, basierend auf dem Vorwärts-Rückwärts-Neigungswert.

7. Das Verfahren nach einem der vorhergehenden Ansprüche, wobei die Posenerkennung für ein Sitzbelegungssystem verwendet wird, um Sicherheitsfunktionen in dem Fahrzeug zu steuern.

8. Das Verfahren nach einem der vorhergehenden Ansprüche, wobei eine grafische Darstellung auf einer Anzeige innerhalb des Fahrzeugs auf einer Ausgabe eines Sitzbelegungssystems basiert, wobei die Ausgabe des Sitzbelegungssystems auf mindestens einem von der Posenerkennung, dem zweiten Körperbegrenzungsbereich und dem zweiten Gesichtsbegrenzungsbereich (64B, 74B) basiert.

9. Das Verfahren nach einem der vorhergehenden Ansprüche, wobei das Verfahren mit einer Periodizität und/oder als Reaktion auf eine Person-zu-Sitz-Zuweisungsänderung eines der Sitze in dem Fahrzeug durchgeführt wird.

10. Ein Sitzbelegungssystem in einem Fahrzeug, umfassend eine Sitzzuweisungslogik, wobei das Sitzbelegungssystem angepasst ist, um das Verfahren nach einem der vorhergehenden Ansprüche durchzuführen.

11. Das Sitzbelegungssystem nach Anspruch 10, wobei als Reaktion auf das Bestimmen der Pose der Person die Sitzzuweisungslogik des Sitzbelegungssystems basierend auf der bestimmten Pose aktualisiert wird.

12. Das Sitzbelegungssystem nach Anspruch 11, wobei das Aktualisieren der Sitzzuweisungslogik das Anpassen mindestens einer Position einer Ecke und/oder einer Kante eines Sitzbegrenzungsbereichs (93-95, 95') gemäß mindestens dem zweiten Körperbegrenzungsrahmen umfasst.

13. Das Sitzbelegungssystem nach Anspruch 11 oder 12, wobei das Aktualisieren der Sitzzuweisungslogik das Anpassen von Parametern, die Ecken und/oder Kanten des Sitzbegrenzungsbereichs (93-95, 95') zugeordnet sind, gemäß mindestens dem zweiten Körperbegrenzungsrahmen umfasst.

14. Ein Fahrzeug, umfassend:
eine Kamera zum Aufnehmen von Bildern (39) eines Innenraums des Fahrzeugs; und
das Sitzbelegungssystem nach einem der Ansprüche 10 bis 13.

15. Ein Computerprogrammprodukt, umfassend Anweisungen, die, wenn sie auf einem Computer ausgeführt werden, den Computer veranlassen, das Verfahren nach einem der Ansprüche 1 bis 9 durchzuführen.

## Revendications

1. Un procédé implémenté par calculateur de détection de posture d'une personne dans un véhicule, comprenant :
- la réception (11), en provenance d'une caméra embarquée, d'une image à l'intérieur du véhicule montrant un siège de véhicule occupé par la personne ;
- l'obtention (12) de premières caractéristiques d'une première aire englobante de visage (64B, 74B) et d'une première aire englobante de corps associées au siège occupé du véhicule, les premières caractéristiques concernant une position et une aire d'une aire englobante de visage de référence (21B, 22B) et/ou les premières caractéristiques concernant une position et une aire d'une aire englobante de corps de référence (21A, 22A) ;
- la détermination (13, 14) à partir de l'image d'une seconde aire englobante de corps et d'une seconde aire englobante de visage associée (64B, 74B) de la personne ;
- la détermination (15) de secondes caractéristiques de la seconde aire englobante de visage (64B, 74B) et de la seconde aire englobante de corps, les secondes caractéristiques concernant une position et une aire de l'aire englobante de visage courante (64B, 74B) et/ou les secondes caractéristiques concernant une position et une aire d'une aire englobante de corps courante (64A, 74A) ; et
- la détermination d'une posture de la personne sur la base des secondes caractéristiques et des premières caractéristiques ;
dans lequel une aire englobante est une aire 2D autour d'un objet, et dans lequel l'aire englobante est un cadre englobant défini par au moins une largeur, une hauteur, une position *x* d'un centre, et une position *y* d'un centre par rapport à une image prise par la caméra embarquée.

2. Le procédé de la revendication 1, dans lequel l'obtention (12) des premières caractéristiques comprend la récupération de la première aire englobante de visage (64B, 74B) et de la première aire englobante de corps depuis une première mémoire sur la base d'une identification faciale de la personne.

3. Le procédé de la revendication 1 ou de la revendication 2, dans lequel l'obtention (12) des premières caractéristiques comprend la récupération de la première aire englobante de visage (64B, 74B) et de la première aire englobante de corps depuis une seconde mémoire, la première aire englobante de visage (64B, 74B) et la première aire englobante de corps étant déterminées sur la base d'une position moyenne et/ou d'une aire moyenne des aires englobantes du visage (64B, 74B) et des aires englobantes du corps capturées historiquement pour des personnes sur le siège.

4. Le procédé de l'une des revendications 1 à 3, dans lequel l'obtention (12) des premières caractéristiques comprend la détermination de la première aire englobante de visage (64B, 74B) et de la première aire englobante de corps sur la base d'une position moyenne et/ou d'une aire moyenne des aires englobantes du visage (64B, 74B) et des aires englobantes du corps capturées sur une pluralité d'images (39) de l'intérieur du véhicule pour la personne sur le siège au cours d'une certaine période d'initialisation.

5. Le procédé de l'une des revendications précédentes, dans lequel l'au moins une caractéristique comprend une position d'une aire englobante de visage (64B, 74B) et une position d'une aire englobante de corps, et dans lequel la détermination de la posture de la personne comprend :
- le calcul d'une valeur de penchement gauche-droite de la personne sur la base de la position de la première aire englobante de visage (64B, 74B) et de la première aire englobante de corps et de la position de la seconde aire englobante de visage (64B, 74B) et de la seconde aire englobante de corps ; et
- la détermination que la personne penche vers la droite ou vers la gauche sur la base de la valeur de penchement gauche-droite.

6. Le procédé de l'une des revendications précédentes, dans lequel l'au moins une caractéristique comprend une aire couverte par une aire englobante de visage (64B, 74B) et une aire couverte par une aire englobante de corps, et dans lequel la détermination de la posture de la personne comprend :
- le calcul d'une valeur de penchement avant-arrière de la personne sur la base d'au moins deux parmi l'aire de la première aire englobante de visage (64B, 74B), l'aire de la première aire englobante de corps, l'aire de la seconde aire englobante de visage (64B, 74B), et l'aire de la seconde aire englobante de corps ; et
- la détermination que la personne penche vers l'avant ou vers l'arrière sur la base de la valeur de penchement avant-arrière.

7. Le procédé de l'une des revendications précédentes, dans lequel la détection de posture pour un système d'occupation de siège est utilisée pour contrôler des fonctions de sécurité du véhicule.

8. Le procédé de l'une des revendications précédentes, dans lequel une représentation graphique sur un afficheur à l'intérieur du véhicule est basée sur une sortie d'un système d'occupation de siège, la sortie du système d'occupation de siège étant basée sur au moins l'une parmi la détection de posture, la seconde aire englobante de corps, et la seconde aire englobante de visage (64B, 74B).

9. Le procédé de l'une des revendications précédentes, dans lequel le procédé est mis en œuvre à une périodicité et/ou en réponse à un changement d'attribution personne-à-siège de l'un quelconque des sièges du véhicule.

10. Un système d'occupation de siège dans un véhicule comprenant une logique d'attribution de siège, le système d'occupation de siège étant apte à mettre en œuvre le procédé de l'une des revendications précédentes.

11. Le système d'occupation de siège de la revendication 10, dans lequel, en réponse à la détermination de la posture de la personne, la logique d'attribution de siège du système d'occupation de siège est mise à jour sur la base de la posture déterminée.

12. Le système d'occupation de siège de la revendication 11, dans lequel la mise à jour de la logique d'attribution de siège comprend l'adaptation d'au moins une position d'un angle et/ou d'un bord d'une aire englobante de siège (93-95, 95') au moins selon le second cadre englobant du corps.

13. Le système d'occupation de siège de la revendication 11 ou 12, dans lequel la mise à jour de la logique d'attribution de siège comprend l'adaptation de paramètres associés à des angles et/ou des bords de l'aire englobante de siège (93-95, 95') au moins en fonction du second cadre englobant du corps.

14. Un véhicule comprenant :
- une caméra pour prendre des images (39) d'un intérieur du véhicule ; et
- le système d'occupation de siège de l'une des revendications 10 à 13.

15. Un produit de programme informatique comprenant des instructions qui, lorsqu'elles sont exécutées sur un calculateur, font en sorte que le calculateur mette en œuvre le procédé de l'une des revendications 1 à 9.
